# EUROPEAN PATENT SPECIFICATION

(11) **EP 2 176 027 B1**
(45) Date of publication and mention of the grant of the patent: **11.05.2011**
(21) Application number: 08792446.0
(22) Date of filing: 07.08.2008
(51) Int. Cl.: B23K 20/10, H01R 43/02

(54) **ULTRASONIC JOINING METHOD USING A FLAT END FACE OF CHIP PROVIDED WITH STRAIGHT GROOVES**
ULTRASCHALLVERBINDUNGSVERFAHREN UNTER VERWENDUNG FLACHER CHIPSTIRNFLÄCHE MIT GERADEN KERBUNGEN
PROCÉDÉ D'ASSEMBLAGE PAR ULTRASONS UTILISANT UNE EXTRÉMITÉ PLATE D'UNE PUCE COMPORTANT DES RAINURES DROITES

(30) Priority: 08.08.2007 JP 2007206776
(43) Date of publication of application: 21.04.2010
(73) Proprietor: Yazaki Corporation, Minato-ku Tokyo 108-8333 (JP)
(72) Inventor: TOKUTOMI, Junichiro, Susono-shi Shizuoka 410-1194 (JP); HANAZAKI, Kenichi, Susono-shi Shizuoka 410-1194 (JP)
(74) Representative: Viering, Jentschura & Partner
(86) International application number: PCT/JP2008/064561
(87) International publication number: WO 2009/020242

(56) References cited:
- JP-A- 5 021 541
- JP-A- 2004 351 428
- JP-A- 2006 165 518
- US-A- 4 589 584
- US-A1- 2002 130 159

## Description

The present invention relates to a method of ultrasonic joining an electric wire to an object to be joined such as another electric wire, according to the preamble of claim 1 (see, for example, JP 2004/351 428).

### [BACKGROUND ART]

Various electronic instruments are mounted on a motor vehicle as a mobile unit. The motor vehicle mounts a wiring harness for transmitting electric power from a power source such as a battery to the electronic instruments and control signals from a control device to the electronic instruments. The wiring harness includes a plurality of electric wires and joint parts for electrically connecting the electric wires to each other.

Each electric wire includes an electrically conductive core wire and an electrically insulating coating which coats the core wire. The coating of a portion of each electric wire is removed so as to expose the core wire corresponding to said portion of the electric wire, then thus exposed core wires are caulked by using a joint terminal or the like, thereby constructing the joint part described above. That is, the wiring harness uses the joint terminals in order to electrically connect the electric wires to each other. As a result, the wiring harness tends to increase the number of components included therein and therefore a size of the wiring harness tends to become large.

It has been proposed an idea that ultrasonic vibration energy is applied to one of electric wires, which are to be joined to each other, on a condition that a pressure is applied to electric wires in a direction in which the electric wires approach each other, thereby joining (i.e. metallic bonding) core wires of the respective electric wires to each other (see Japanese Patent Application Laid-Open No. 2006-116559).

Japanese Patent Application Laid-Open No. 2006-116559 discloses an ultrasonic joining apparatus for joining core wires of respective electric wires to each other, in which a plurality of electric wires to be joined to each other are put between a chip and an anvil, and ultrasonic vibration energy is applied thereto through the chip. In the ultrasonic joining apparatus, an end surface of the chip is provided with a plurality of head-crushed square pyramid-shaped uneven parts, said end surface coming in contact with the electric wire, so that the core wires of the respective electric wires can be rapidly joined to each other.

US 4 589 584 A discloses an ultrasonic joining method comprising the steps of: putting an electric wire and an object to be joined to the electric wire between a chip and an anvil, the electric wire including a core wire and a coating, the chip being vibrated by a drive source, and the anvil facing the chip; and vibrating the chip by the drive source to transmit a vibration of the chip to the electric wire so as to melt the coating of the electric wire, thereby joining the core wire of the electric wire and the object to be joined to each other, wherein both of an end surface of the chip facing the anvil and an end surface of the anvil facing the chip are formed flat.

Another ultrasonic joining method using straight grooves is disclosed in JP 05 021541 A.

JP 2004/351 428 discloses an ultrasonic joining method wherein non straight grooves are used.

### [DISCLOSURE OF THE INVENTION]

### [PROBLEMS THAT THE INVENTION IS TO SOLVE]

In the ultrasonic joining apparatus disclosed in Japanese Patent Application Laid-Open No. 2006-116559, since the end surface of the chip is provided with the plurality of the head-crushed square pyramid-shaped uneven parts, therefore the uneven parts might break the core wire (i.e. conductor) upon the joining, resulting in that an area of the joined portion between the core wires is reduced. Moreover, if the breakage of the core wire is attempted by making a size of the uneven part small, a time required to remove the coating from between the core wires becomes long.

There may be an idea that both end surfaces of the chip and anvil are formed flat. However, in such a case, a load per unit area and amplitude of vibration due to the ultrasonic vibration energy per unit area becomes small, resulting in that transmission efficiency of the ultrasonic vibration energy to between the electric wires as the joining objects becomes low and that a time required to remove the coating from between the core wires becomes long.

If the time required to remove the coating becomes long, the core wires are damaged. Moreover, since the removal of the coating from between the core wires is hard, therefore an area of a joined portion between the core wires (i.e. conductors) becomes small.

It is therefore an objective of the present invention to provide an ultrasonic joining method, by which a large joined area can be obtained in a short period of operating time without damage.

### [MEANS OF SOLVING THE PROBLEMS]

According to the present invention, an ultrasonic joining method as claimed in claim 1 is provided. The dependent claims show some examples of such method.

In order to solve the above problems and attain the above objective, the present invention is an ultrasonic joining method including the steps of:
putting an electric wire and an object to be joined to the electric wire between a chip and an anvil, the electric wire including a core wire and a coating, the chip being vibrated by a drive source, and the anvil facing the chip; and
vibrating the chip by the drive source to transmit a vibration of the chip to the electric wire so as to melt the coating of the electric wire, thereby joining the core wire of the electric wire and the object to be joined to each other,
wherein both of an end surface of the chip facing the anvil and an end surface of the anvil facing the chip are formed flat,
wherein a plurality of first straight grooves, each extending straight, arranged in parallel with each other and spaced from each other, are provided on at least one of the end surfaces
wherein volume within the plurality of the first straight grooves is formed larger than volume of the molten coating of the electric wire.

With the construction of the method described above, since at least one of the flat end surface of the chip and the flat end surface of the anvil is provided with the plurality of the first straight grooves, therefore a part, which presses the electric wire and the object to be joined to the electric wire in a direction in which the electric wire and the object to be joined approach each other, is flat. Further, a contacting area between said at least one and the electric wire and the object to be joined becomes small. Furthermore, the molten coating rapidly enters in the first straight groove.

A direction of the vibration of the chip crosses at right angles a longitudinal direction of the first straight groove.

At least one of the end surfaces provided with the plurality of the first straight grooves is further provided with a plurality of second straight grooves each extending straight crossing the first straight groove, arranged in parallel with each other and spaced from each other.

With the construction described above, since the plurality of second straight grooves are provided in addition to the plurality of the first straight grooves, therefore a contacting area between at least one of the flat end surface of the chip and the flat end surface of the anvil and the electric wire and the object to be joined becomes further small.

Both of the end surface of the chip facing the anvil and the end surface of the anvil facing the chip are provided with the respective plurality of the first straight grooves.

With the construction described above, since both of the end surfaces of the chip and the anvil are provided with the respective plurality of the first straight grooves, therefore the vibration can be efficiently transmitted to the electric wire and the object to be joined to the electric wire.

### [EFFECTS OF THE INVENTION]

With the construction of the present invention, since the part, which presses the electric wire and the object to be joined to the electric wire in the direction in which the electric wire and the object to be joined approach each other, is formed flat, therefore damage such as breakage of the core wire of the electric wire or of the object to be joined during the joining can be prevented from occurring.

Further, since the contacting area between at least one of the flat end surface of the chip and the flat end surface of the anvil and the electric wire and the object to be joined becomes small, therefore the vibration can be sufficiently transmitted to between the electric wire and the object to be joined, so that the coating of the electric wire can be rapidly removed from between the core wire of the electric wire and the object to be joined, and a joined area between the core wire of the electric wire and the object to be joined can be made large.

That is, a large joined area can be obtained without damage in a short period of operating time.

Furthermore, since the molten coating rapidly enters into the first straight groove, therefore the coating of the electric wire can be further rapidly removed from between the core wire of the electric wire and the object to be joined.

With the construction of the present invention, since the vibration direction of the chip by the drive source crosses at right angles the longitudinal direction of the first straight groove, therefore the chip and the electric wire and the object to be joined are vibrated relatively to each other along a width direction of the first straight groove. Accordingly, the coating of the electric wire can be rapidly removed from between the core wire of the electric wire and the object to be joined.

With the construction of the present invention, since a contacting area between at least one of the flat end surface of the chip and the flat end surface of the anvil and the electric wire and the object to be joined becomes further small, therefore the vibration can be efficiently securely transmitted to between the electric wire and the object to be joined to the electric wire. Accordingly, the coating of the electric wire can be rapidly removed from between the core wire of the electric wire and the object to be joined, and a joined area between the core wire of the electric wire and the object to be joined can be securely made large.

With the construction of the present invention, since the vibration can be efficiently transmitted to the electric wire and the object to be joined to the electric wire, therefore the coating of the electric wire can be efficiently removed, and the core wire of the electric wire and the object to be joined can be efficiently joined.

### [BRIEF DESCRIPTION OF THE DRAWINGS]

[FIG. 1] A view illustrating a primary construction of an ultrasonic joining apparatus that may be used for performing the method according to a preferred embodiment of the present invention
[FIG. 2] An enlarged perspective view of a part of a chip of the ultrasonic joining apparatus shown in Fig. 1
[FIG. 3] A front view of the chip shown in Fig. 2
[FIG. 4] A plan view of an end surface of the chip viewed from a direction of an arrow IV shown in Fig. 3
[FIG. 5] A side view of the chip viewed from a direction of an arrow V shown in Fig. 3
[FIG. 6] A perspective view illustrating a flexible flat cable (FFC), in which conductors are joined to each other by the ultrasonic joining apparatus shown in Fig. 1
[FIG. 7] A view illustrating a state when a flexible flat cable is put between the chip and anvil of the ultrasonic joining apparatus shown in Fig. 1
[FIG. 8] A view illustrating a state when conductors of flexible flat cables are joined to each other from the state shown in Fig. 7
[FIG. 9] A front view illustrating another example of the chip shown in Fig. 3
[FIG. 10] A plan view of an end surface of the other example of the chip viewed from a direction of an arrow X shown in Fig. 9
[FIG. 11] A side view of the other example of the chip viewed from a direction of an arrow XI shown in Fig. 9
[FIG. 12] An enlarged perspective view of a part of another example of a chip and an anvil of the ultrasonic joining apparatus shown in Fig. 2

### [ABBREVIATION NUMERALS]

1: ultrasonic joining apparatus
2: first flexible flat cable (electric wire)
4: first conductor (core wire)
5: first coating (coating)
7: second conductor (object to be joined)
12: piezoelectric vibrator
14: chip
15: anvil
17: end surface
18: first straight groove
19: end surface
20: second straight groove
W: crossing direction

### [BEST MODE FOR CARRING OUT THE INVENTION]

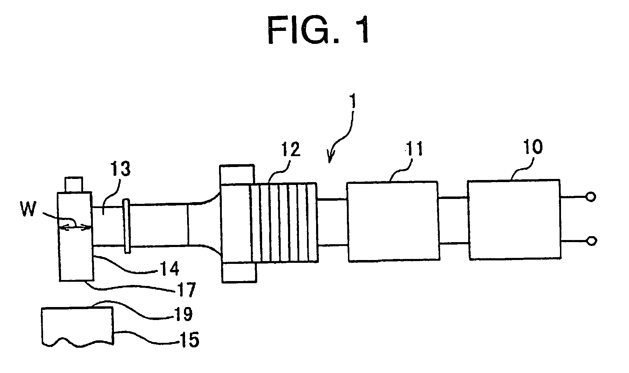

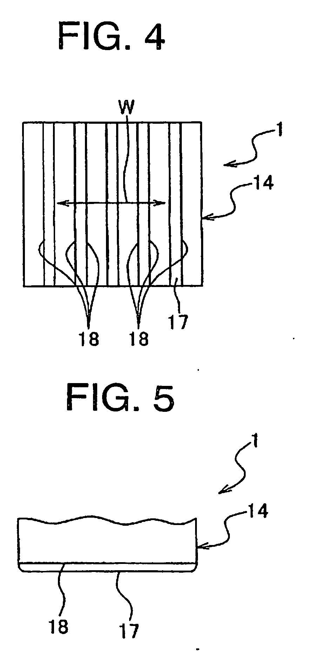

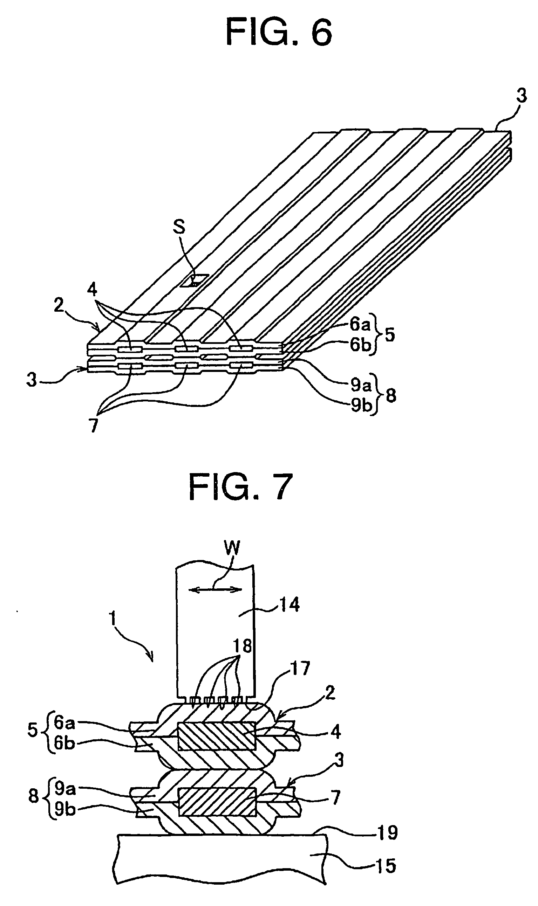

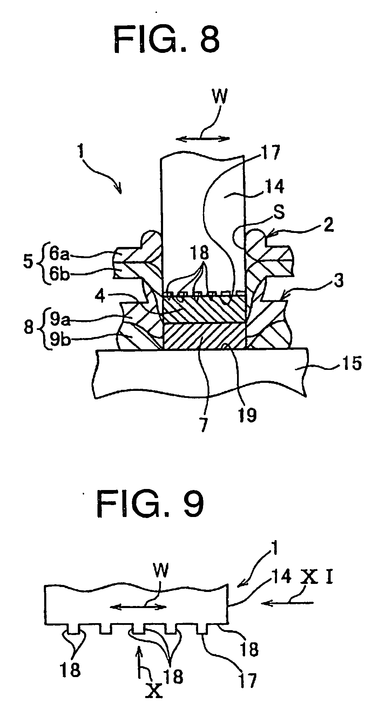

In the following, an ultrasonic joining apparatus 1 that may be used for performing the method according to a preferred embodiment of the present invention will be explained with reference to Figs. 1 - 8. As shown in Figs. 7 and 8, the ultrasonic joining apparatus 1 shown in Fig. 1 is used to electrically mechanically connect the first conductor 4 (explained later) of the first flexible flat cable 2 (hereinafter, FFC 2) as an electric wire to the second conductor 7 (explained later) of the second flexible flat cable 3 (hereinafter, FFC 3) as an object to be joined.

As shown in Fig. 6, the first FFC 2 includes a plurality of the first conductors 4 and the first coating 5 which coats the first conductors 4. Each first conductor 4 is formed in a rectangular shape in section. Each first conductor 4 is formed in a band-shape extending straight. The first conductors 4 are arranged in parallel with each other. The first conductors 4 are arranged being spaced from each other. Of course, each first conductor 4 has an electrically conductive property. In an example shown in the figure, three first conductors 4 are provided. The first conductor 4 is the core wire.

As shown in Figs. 7 and 8, the first coating 5 includes a pair of electrically insulating sheets 6a and 6b, which are made of insulating synthetic resin and formed in a band-shape. That is, the first coating 5 has an electrically insulating property. The insulating sheets 6a and 6b put the plurality of the first conductors 4 therebetween so as to coat the first conductors 4. The first conductor 4 and the first coating 5 have flexibility. The first coating 5 is the coating.

As shown in Fig. 6, the second FFC 3 includes a plurality of the second conductors 7 and the second coating 8 which coats the second conductors 7. Each second conductor 7 is formed in a rectangular shape in section. Each second conductor 7 is formed in a band-shape extending straight. The second conductors 7 are arranged in parallel with each other. The second conductors 7 are arranged being spaced from each other. Of course, each second conductor 7 has an electrically conductive property. In an example shown in the figure, three second conductors 7 are provided. The second conductor 7 is the object to be joined.

As shown in Figs. 7 and 8, the second coating 8 includes a pair of electrically insulating sheets 9a and 9b, which are made of insulating synthetic resin and formed in a band-shape. That is, the second coating 8 has an electrically insulating property. The insulating sheets 9a and 9b put the plurality of the second conductors 7 therebetween so as to coat the second conductors 7. The second conductor 7 and the second coating 8 have flexibility.

Thus, the first FFC 2 and the second FFC 3 are formed in a flat band-shape having flexibility. A flat circuit body described in this specification includes a plurality of conductors arranged in parallel with each other and an insulating coating which coats the conductors, and are formed in a flat band-shape.

The ultrasonic joining apparatus 1 shown in Fig. 1 places the first FFC 2 and the second FFC 3 one upon another, presses them in a direction in which they approach each other, provides them with ultrasonic vibration energy to melt the coatings 5 and 8, thereby joining the conductors 4 and 7 to each other. Here, the ultrasonic vibration energy means energy that the ultrasonic joining apparatus 1 gives to an object to be joined when joining the object to be joined. For example, the ultrasonic vibration energy is energy calculated by multiplying an electric power value (watt) when an electric source 10 (explained later) applies electric power to an oscillator by a time period while the electric source 10 applies the electric power to the oscillator.

As shown in Fig. 1, the ultrasonic joining apparatus 1 includes an electric source 10, an oscillator 11, a piezoelectric vibrator 12, a horn 13, a chip (or tool horn) 14, and an anvil 15 facing the chip 14. The electric source 10 applies electric power to the oscillator 11.

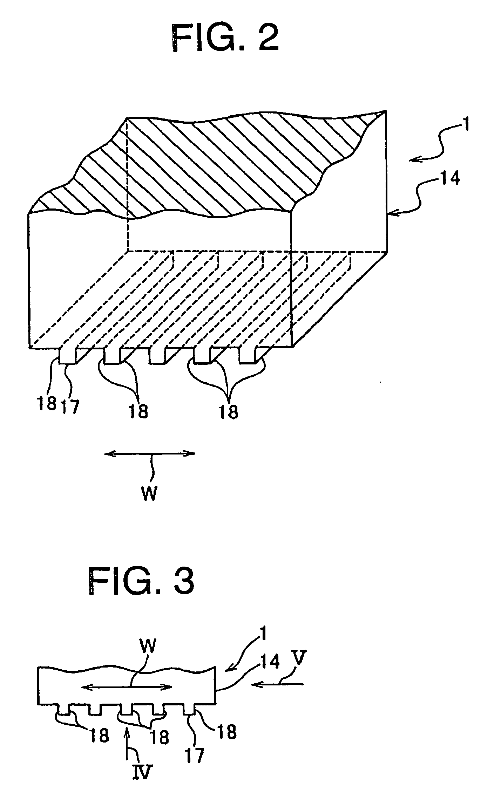

The oscillator 11 vibrates the piezoelectric vibrator 12 as the drive source when the electric source 10 applies electric power to the oscillator 11. The horn 13 is attached to the piezoelectric vibrator 12. The chip 14 is attached to an end of the horn 13. That is, the piezoelectric vibrator 12 vibrates the chip 14 through the horn 13. At that time, the chip 14 vibrates along a direction W (shown with an arrow in Fig. 2) crossing at right angles a direction in which the chip 14 and the anvil 15 approach or leave each other. The chip 14 and the anvil 15 can put the FFC 2 and FFC 3 therebetween. Detailed constructions of the chip 14 and the anvil 15 will be explained later.

The ultrasonic joining apparatus 1 puts objects to be joined to each other between the chip 14 and the anvil 15 and allows the oscillator 11 to vibrate the piezoelectric vibrator 12 on a condition that the chip 14 and the anvil 15 are pressed in a direction in which the chip 14 and the anvil 15 approach each other, so that the vibration is transmitted to the chip through the horn 13. Then, the ultrasonic joining apparatus 1 vibrates the chip 14 along the direction W described above so as to give the ultrasonic vibration energy to the objects (to be joined to each other), which are put between the chip 14 and the anvil 15, thereby joining the objects to each other.

As shown in Figs. 2 - 5, the chip 14 is formed in a square pole and includes a flat end surface 17 facing the anvil 15. The chip further includes a plurality of the first straight grooves 18 extending straight on the end surface 17. Each first straight groove 18 is formed concave from the end surface 17. The plurality of the first straight grooves 18 are arranged in parallel with each other having a distance therebetween (i.e. spaced from each other). A longitudinal direction of the first straight groove 18 crosses the direction W described above at right angles.

As shown in Fig. 2, an inner surface of the first straight groove 18 rises up from the end surface 17 in a direction crossing the end surface 17 at right angles, that is, the first straight groove 18 is formed in a square shape in section. A width of the end surface 17 of the chip 14 in the direction W described above is formed approximately equal to a width of the conductor 4 and to a width of the conductor 7.

As shown in Figs. 7 and 8, the anvil 15 has a flat end surface 19 facing the chip 14. The end surface 19 of the anvil 15 is parallel to the end surface 17 of the chip 14.

When the conductor 4 of the FFC 2 and the conductor 7 of the FFC 3 are joined to each other by using the ultrasonic joining apparatus 1, first, the second FFC 3 is placed on the end surface 19 of the anvil 15 and then, the first FFC 2 is placed on the second FFC 3. Then, as shown in Fig. 7, the conductor 4 of the FFC 2 and the conductor 7 of the FFC 3 to be joined to each other are put between the chip 14 and the anvil 15.

Then, the FFC 2 and the FFC 3 are pressed with the chip 14 and the anvil 15 in a direction in which the FFC 2 and the FFC 3 approach each other. On this condition, the oscillator 11 vibrates the piezoelectric vibrator 12. The vibration of the piezoelectric vibrator 12 is transmitted to the chip 14 through the horn 13 (see Fig. 1). The chip 14 vibrates along the direction W described above with respect to the anvil 15, so that the vibration of the chip 14 is transmitted to the FFC 2. Then, the coating 5 of the FFC 2 and the coating 8 of the FFC 3, which are positioned between the chip 14 and the anvil 15, melt.

Since the chip 14 and the anvil 15 are pressed in a direction in which the chip 14 and the anvil 15 approach each other, therefore the molten coating 5 and the molten coating 8 are removed from between the conductor 4 and the conductor 7, which are put between the chip 14 and the anvil 15. The removed coating 5 and removed coating 8 enter into the first straight grooves 18. That is, the removed coating 5 and removed coating 8 are received in the first straight grooves 18.

As a result, as shown in Fig. 8, the conductor 4 and the conductor 7 come in contact with each other, so that the conductor 4 and the conductor 7 are bonded together by means of a metallic bond on a condition that the conductor 4 and the conductor 7 do not melt but maintain their solid state. Thereafter, when the vibration of the piezoelectric vibrator 12 is stopped, at a portion where the conductor 4 and the conductor 7 are joined to each other (hereinafter, joined portion S), initially the coating 5 of the FFC 2 and the coating 8 of the FFC 3 are molten, then the coating 5 and the coating 8 are gradually solidified as the temperature decreases after the vibration of the piezoelectric vibrator 12 is stopped, so that the coating 5 of the FFC 2 and the coating 8 of the FFC 3 are welded to each other. Thus, at the joined portion S, the conductor 4 of the FFC 2 and the conductor 7 of the FFC 3 are joined to each other, and the coating 5 and the coating 8 are welded to each other.

Thus, the conductor 4 of the FFC 2 and the conductor 7 of the FFC 3 are joined to each other by means of ultrasonic joining (i.e. ultrasonic welding). Thus, the FFC 2 and the FFC 3 are electrically mechanically joined to each other.

According to the example described above, since the first straight grooves 18 are provided on the end surface 17 of the chip 14 of the end surface 17 of the chip 14 and the end surface 19 of the anvil 15, therefore a part to be pressed in a direction in which the conductor 4 and the conductor 7 approach each other is formed flat. Therefore, the conductor 4 and the conductor 7 are prevented from being damaged during the joining.

Further, since the first straight grooves 18 are provided on the end surface 17 of the chip 14 of the end surface 17 of the chip 14 and the end surface 19 of the anvil 15, therefore a contact area between the end surface 17 of the chip 14 and the FFC 2 is small. Accordingly, the ultrasonic vibration can be sufficiently transmitted to between the FFC 2 and the FFC 3, therefore the coating 5 and the coating 8 can be rapidly removed from between the conductor 4 and the conductor 7. That is, the coating 5 and the coating 8 can be removed from between the conductor 4 and the conductor 7 in a short period of time and the contact area between the conductor 4 and the conductor 7 can be made large.

Therefore, the conductor 4 of the FFC 2 and the conductor 7 of the FFC 3 can be joined to each other with a large contact area without damage in a short period of working time.

Further, since the conductor 4 and the conductor 7 are joined to each other without removing a part of the coating 5 and the coating 8 in advance, therefore a time period required to join the conductor 4 and the conductor 7 to each other can be shortened. Further, since the coating 5 and the coating 8 are welded at the joined portion S, therefore the FFC 2 and the FFC 3 can be firmly fastened to each other.

Since the piezoelectric vibrator 12 vibrates the chip 14 along the direction W crossing at right angles a direction in which the chip 14 and the anvil 15 face each other, therefore the chip 14 and the FFC 2 always come in contact with each other. Accordingly, the ultrasonic vibration can be sufficiently securely transmitted to between the FFC 2 and the FFC 3 and therefore, the coating 5 and the coating 8 can be rapidly securely removed from between the conductor 4 and the conductor 7.

The direction W in which the piezoelectric vibrator 12 vibrates the chip 14 crosses at right angles the longitudinal direction of the first straight groove 18. Therefore, the chip 14 and the FFCs 2 and 3 vibrate relatively to each other along the width direction of the first straight groove 18. Therefore, the coating 5 of the FFC 2 and the coating 8 of the FFC 3 can be further rapidly removed from between the conductor 4 and the conductor 7.

The effects were confirmed by a test shown below. In the test, the conductor 4 of the FFC 2 and the conductor 7 of the FFC 3 were actually joined by changing a shape formed on the end surface 17 of the chip 14. The results are shown in Table 1.

**Table 1**

| Shape of end surface | Example | Comparative Example 1 | Comparative Example 2 | Comparative Example 3 |
|---|---|---|---|---|
| Joining time | 0.3 sec | 0.8 sec | 1.4 sec | ≥ 5 sec |
| Joining strength | 73 N | 71 N | 40 N | 34 N |
| (Strength of conductors) | (32 N) | (31 N) | (18 N) | (8 N) |

Table 1 shows a condition, on which the joining strength (newton unit) takes the highest value for each of the Example (according to the present invention) and the Comparative Examples 1 - 3. The joining strength (newton unit) means force required to separate the whole FFC 2 and the whole FFC 3 from each other after the joining between the conductor 4 and the conductor 7. The strength of conductors (newton unit) means force required only to separate the conductor 4 and the conductor 7 from each other after the joining between the conductor 4 and the conductor 7. That is, the strength of conductors is a part of the joining strength. The joining time means a time required to obtain the joining strength described above, wherein said time corresponds to a time period while the oscillator 11 vibrates the piezoelectric vibrator 12.

In Table 1, the Example means a case in which the chip 14 having a plurality of the first straight grooves 18 on the end surface 17 as described in the preferred embodiment of the present invention was used. The Comparative Example 1 means a case in which a chip having a plurality of head-crushed square pyramid-shaped uneven parts on an end surface of the chip as described in Japanese Patent Application Laid-Open No. 2006-116559 was used. The Comparative Example 2 means a case in which a chip having a plurality of triangular pyramid-shaped uneven parts on an end surface of the chip was used. The Comparative Example 3 means a case in which a chip having a flat end surface was used.

Table 1 reveals that the joining time of the Example 1 (according to the present invention), in which the end surface 17 is provided with a plurality of the first straight grooves 18 arranged parallel with each other and spaced from each other, is significantly shorter than those of the Comparative Examples 1 - 3 (that is, shorter by about 60 % compared to the Comparative Example 1, shorter by about 80 % compared to the Comparative Example 2, and shorter by about 95 % compared to the Comparative Example 3). Table 1 also reveals that the joining strength of the Example 1 is higher than those of the Comparative Examples 1 - 3.

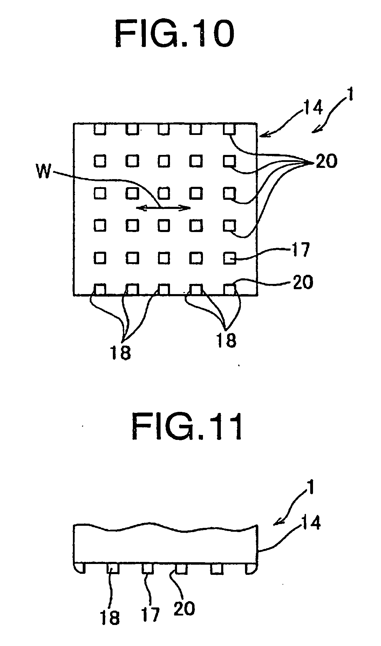

In the preferred example described above, the end surface 17 of the chip 14 is provided with only the first straight grooves 18. However, in another preferred embodiment of the present invention, as shown in Figs. 9 - 11, the end surface 17 of the chip 14 is further provided with a plurality of the second straight grooves 20 in addition to the plurality of the first straight grooves 18. Each second straight groove 20 is formed concave from the end surface 17 and extends straight. The plurality of the second straight grooves 20 are arranged in parallel with each other having a distance therebetween (i.e. spaced from each other). A longitudinal direction of the second straight groove 20 crosses the longitudinal direction of the first straight groove 18 (at right angles in an example show in the figure).

In the other preferred example described above, since the second straight grooves 20 are provided in addition to the first straight grooves 18, therefore a contact area between the flat end surface 17 of the chip 14 and the FFC 2 is small. Accordingly, the ultrasonic vibration can be securely transmitted to between the FFC 2 and the FFC 3, so that the coatings 5 of the FFC 2 and the coating 8 of the FFC 3 can be securely rapidly removed from between the conductor 4 and the conductor 7. Therefore, the coatings 5 and 8 can be securely removed from between the conductor 4 and the conductor 7 in a short period of time and a joined area between the conductor 4 and the conductor 7 can be securely made large.

In the method of the present invention, volume within the plurality of the first straight grooves 18 (that is, total volume of spaces each surrounded by inner surfaces of each first straight groove 18 and the end surface 17 of the chip 14) is formed larger than volume of the coatings 5 and 8 that melt upon the joining. For example, the volume within the plurality of the first straight grooves 18 may be about ten times as much as the volume of the coatings 5 and 8 that melt upon the joining.

In such a case as described above, since the volume within the plurality of the first straight grooves 18 is larger than volume of the coatings 5 and 8 that melt upon the joining, therefore the molten coatings 5 and 8 rapidly enter into the first straight grooves 18. Therefore, the coatings 5 and 8 of the FFC 2 and 3 can be further rapidly removed from between the conductors 4 and 7.

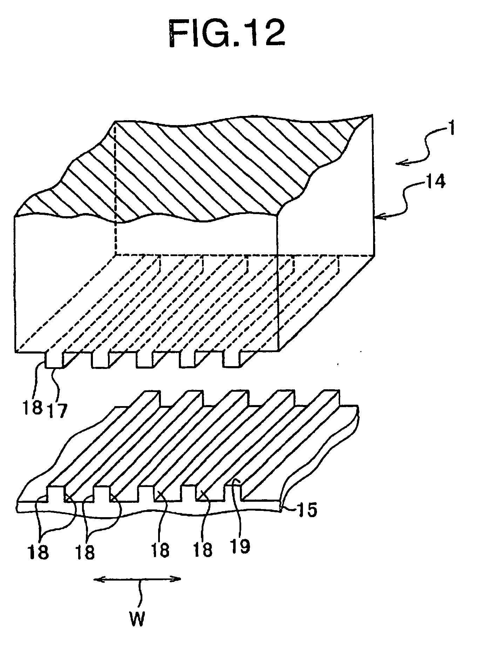

Further, as shown in Fig. 12, both of the end surface 17 of the chip 14 and the end surface 19 of the anvil 15 may be provided with the respective plurality of the first straight grooves 18. Furthermore, in the present invention, both of the end surface 17 of the chip 14 and the end surface 19 of the anvil 15 may be further provided with the respective plurality of the second straight grooves 20 in addition to the respective plurality of the first straight grooves 18. Both of the end surface 17 of the chip 14 and the end surface 19 of the anvil 15 may be provided with the respective plurality of the first straight grooves 18 and/or the respective plurality of the second straight grooves 20.

As for the preferred example shown in Fig. 12, since both of the end surface 17 of the chip 14 and the end surface 19 of the anvil 15 are provided with the respective plurality of the first straight grooves 18, therefore the ultrasonic vibration can be efficiently transmitted to the FFC 2 and 3. Therefore, the coatings 5 and 8 of the FFC 2 and 3 can be efficiently removed from between the conductor 4 and the conductor 7 and therefore, the conductor 4 and the conductor 7 of the FFC 2 and 3, respectively, can be efficiently joined to each other.

In the preferred example described above, the conductor 4 and the conductor 7 of the FFC 2 and 3 are joined to each other. However, an electric wire having a round shape in section may be used. Further, an electric wire or a first FFC 2 having a round shape in section may be joined to various objects to be joined such as a metal plate or an electrical conductor sheet.

In the preferred example described above, the straight grooves 18, 20 are provided on the end surface 17 of the chip 14. However, instead, the straight grooves 18, 20 may be provided on the end surface 19 of the anvil 15. Further, alternatively, the straight grooves 18, 20 may be provided on both of the end surface 17 of the chip 14 and the end surface 19 of the anvil 15. That is, the straight grooves 18, 20 may be provided on at least one of the end surface 17 of the chip 14 and the end surface 19 of the anvil 15.

The aforementioned preferred embodiments of the method according to the present invention are described to aid in understanding the present invention and variations may be made by one skilled in the art without departing from the scope of the present invention as defined in the appended claims.

## Claims

1. A method of ultrasonic joining an electric wire to an object to be joined comprising the steps of:
putting an electric wire and an object to be joined to the electric wire between a chip (14) and an anvil (15), the electric wire including a core wire (4) and a coating (5), the chip (14) being vibrated by a drive source (11), and the anvil (15) facing the chip; and
vibrating the chip (14) by the drive source to transmit a vibration of the chip to the electric wire so as to melt the coating (5) of the electric wire, thereby joining the core wire (4) of the electric wire and the object to be joined to each other,
wherein both of an end surface (17) of the chip (14) facing the anvil and an end surface (19) of the anvil (15) facing the chip (14) are formed flat,
**characterized in that**
a plurality of first straight grooves (18), each extending straight, arranged in parallel with each other and spaced from each other, are provided on at least one of the end surfaces (17, 19),
wherein volume within the plurality of the first straight grooves is formed larger than volume of the molten coating of the electric wire,
wherein the volume is the total volume of spaces each surrounded by inner surfaces of each first straight groove (18) and the end surface (17) of the chip (14).

2. The method according to claim 1, wherein a direction of the vibration of the chip (14) crosses at right angles a longitudinal direction of the first straight groove (18).

3. The method according to claim 1 or 2, wherein at least one of the end surfaces (17, 19) provided with the plurality of the first straight grooves (18) is further provided with a plurality of second straight grooves (18) each extending straight crossing the first straight groove (18), arranged in parallel with each other and spaced from each other.

4. The method according to claim 1, 2 or 3, wherein both of the end surface (17) of the chip (14) facing the anvil (15) and the end surface (19) of the anvil (15) facing the chip (14) are provided with the respective plurality of the first straight grooves (18).

## Patentansprüche

1. Ein Verfahren zum Ultraschallfügen einer elektrischen Leitung an ein anzufügendes Objekt, aufweisend die folgenden Schritte:
Positionieren einer elektrischen Leitung und eines an die elektrische Leitung anzufügenden Objektes zwischen einen Chip (14) und einen Amboss (15), wobei die elektrische Leitung einen Kerndraht (4) und eine Ummantelung (5) aufweist, wobei der Chip (14) von einer Antriebsquelle (11) in Schwingungen versetzt wird und der Amboss (15) dem Chip zugewandt ist, und
In-Schwingungen-Versetzen des Chips (14) durch die Antriebsquelle, um eine Schwingung des Chips auf die elektrische Leitung zu übertragen, um die Ummantelung (5) der elektrischen Leitung zu schmelzen, wodurch der Kerndraht (4) der elektrischen Leitung und das anzufügende Objekt zusammengefügt werden,
wobei sowohl eine dem Amboss zugewandte Endfläche (17) des Chips (14) als auch eine dem Chip (14) zugewandte Endfläche (19) des Ambosses (15) flach ausgebildet sind,
**dadurch gekennzeichnet, dass** eine Mehrzahl von ersten geraden Nuten (18), die sich jeweils gerade erstrecken, parallel zueinander angeordnet und im Abstand voneinander angeordnet sind, an mindestens einer der Endflächen (17, 19) vorgesehen ist,
wobei das Volumen in der Mehrzahl der ersten geraden Nuten größer als das Volumen der geschmolzenen Ummantelung der elektrischen Leitung ausgebildet ist, wobei das Volumen das Gesamtvolumen der Räume ist, die jeweils von den Innenflächen jeder ersten geraden Nut (18) und der Endfläche (17) des Chips (14) umgeben sind.

2. Das Verfahren gemäß Anspruch 1, wobei eine Richtung der Schwingung des Chips (14) eine Längsrichtung der ersten geraden Nut (18) rechtwinklig kreuzt.

3. Das Verfahren gemäß Anspruch 1 oder 2, wobei mindestens eine der mit der Mehrzahl der ersten geraden Nuten (18) versehenen Endflächen (17, 19) ferner mit einer Mehrzahl von zweiten geraden Nuten (18) versehen ist, die sich jeweils gerade erstrecken, die erste gerade Nut (18) kreuzen, parallel zueinander angeordnet und im Abstand voneinander angeordnet sind.

4. Das Verfahren gemäß Anspruch 1, 2 oder 3, wobei sowohl die dem Amboss (15) zugewandte Endfläche (17) des Chips (14) als auch die dem Chip (14) zugewandte Endfläche (19) des Ambosses (15) mit der jeweiligen Mehrzahl der ersten geraden Nuten (18) versehen sind.

## Revendications

1. Procédé d'assemblage par ultrasons d'un fil électrique à un objet à assembler, comprenant les étapes consistant à :
placer un fil électrique et un objet à assembler sur le fil électrique entre une puce (14) et une enclume (15), le fil électrique comprenant un fil central (4) et un revêtement (5), la puce (14) étant soumise à des vibrations par une source d'entraînement (11), et l'enclume (15) étant tournée vers la puce ; et
soumettre la puce (14) à des vibrations par la source d'entraînement afin de transmettre une vibration de la puce au fil électrique afin de faire fondre le revêtement (5) du fil électrique, assemblant de la sorte le fil central (4) du fil électrique et l'objet à assembler l'un à l'autre,
dans lequel à la fois une surface d'extrémité (17) de la puce (14) tournée vers l'enclume et une surface d'extrémité (19) de l'enclume (15) tournée vers la puce (14) sont de forme plate,
**caractérisé en ce qu'**une pluralité de première rainures droites (18) s'étendant chacune de manière rectiligne, ménagées parallèlement l'une à l'autre et séparées l'une de l'autre, sont formées sur au moins une des surfaces d'extrémité (17, 19),
dans lequel le volume à l'intérieur de la pluralité de premières rainures droites est formé de manière à être plus grand que le volume du revêtement fondu du fil électrique, dans lequel le volume est le volume total d'espaces chacun entourés par des surfaces internes de chaque première rainure droite (18) et par la surface d'extrémité (17) de la puce (14).

2. Procédé selon la revendication 1, dans lequel une direction de vibration de la puce (14) croise à angle droit une direction longitudinale de la première rainure droite (18).

3. Procédé selon la revendication 1 ou 2, dans lequel au moins une des surfaces d'extrémité (17, 19) munie de la pluralité des première rainures droites (18) est en outre munie d'une pluralité de secondes rainures droites (18) s'étendant chacune de manière rectiligne en travers de la première rainure droite (18), ménagées parallèlement l'une à l'autre et espacées l'une de l'autre.

4. Procédé selon la revendication 1, 2 ou 3, dans lequel à la fois la surface d'extrémité (17) de la puce (14) tournée vers l'enclume (15) et la surface d'extrémité (19) de l'enclume (15) tournée vers la puce (14) sont pourvues de la pluralité respective des première rainures droites (18).
